(19) Europäisches Patentamt
European Patent Office
Office européen des brevets

(11) **EP 4 749 990 A1**

(12) **DEMANDE DE BREVET EUROPEEN**

(43) Date de publication:
**27.05.2026 Bulletin 2026/22**

(21) Numéro de dépôt: **25217552.6**

(22) Date de dépôt: **21.11.2025**

(51) Classification Internationale des Brevets (IPC):
***H04L 9/08*** *(2006.01)*

(52) Classification Coopérative des Brevets (CPC):
**H04L 9/0855**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **22.11.2024 FR 2412822**

(71) Demandeur: **THALES**
**92190 Meudon (FR)**

(72) Inventeurs:
• **DE CHASTENET, Anne**
**78110 Le Vesinet (FR)**
• **COURSIMAULT, Maxime**
**49309 Cholet (FR)**
• **AUGE, Eric**
**49309 Cholet (FR)**

(74) Mandataire: **Lavoix**
**2, place d'Estienne d'Orves**
**75441 Paris Cedex 09 (FR)**

(54) **PROCÉDÉ AMÉLIORÉ D'ÉCHANGE DE CLÉ DE TRANSPORT S'APPUYANT SUR UN RÉSEAU QUANTIQUE COMPORTANT UN GESTIONNAIRE DE CLÉS CENTRALISÉ; INFRASTRUCTURE DE COMMUNICATION ET PRODUIT PROGRAMME D'ORDINATEUR ASSOCIÉS**

(57) Dans ce procédé, un gestionnaire de clés centralisé (40) tient à jour une base de données avec les clés de chacun des nœuds $(30_i)$ du réseau QKD, et, lors de la réception d'une route pour échanger un aléa $(K_0)$ entre un émetteur et un destinataire, sélectionne une clé pour chaque paire de nœuds de la route et transmet, en parallèle à chacun des nœuds de la route, une commande $(C_i)$ identifiant la clé qu'il partage avec le nœud précédent et la clé qu'il partage avec le nœud suivant. Chaque nœud somme (140) les deux clés identifiées et envoie une réponse à l'unité XOR (44), qui construit une chaine globale $(K)$ avant de la transmettre au destinataire pour extraction de l'alea.

FIG.2

EP 4 749 990 A1

**Description**

La présente invention a pour domaine général celui de la sécurité des technologies de l'information dans le cadre de la mise en œuvre de réseaux de communications quantiques.

Plus particulièrement, l'invention s'applique aux procédés de transfert de clés fondés sur un réseau mettant en œuvre un mécanisme de distribution de clés quantiques - QKD (« Quantum Key Distribution »).

La QKD permet une sécurité inconditionnelle des communications, y compris face à la puissance des futurs ordinateurs quantiques, qui devraient permettre de « casser » les procédés cryptographiques classiques (notamment avec l'algorithme de Shor, pour la cryptographique asymétrique).

La QKD met en œuvre deux nœuds quantiques intégrant chacun des interfaces quantiques connectées l'une à l'autre par une liaison optique.

Ces interfaces sont adaptées pour générer et partager une clé quantique le long d'un canal quantique établi entre ces deux interfaces le long de la liaison optique.

Cependant, en l'absence de répéteurs quantiques, la QKD est limitée en distance par les propriétés de la liaison optique. Typiquement, la distance maximum d'une liaison optique support d'un canal quantique est de quelques dizaines de kilomètres.

Pour des distances plus longues, un réseau QKD (ou QKDN pour « Quantum Key Distribution Network »), aussi dénommé réseau sécurisé quantique (ou QSN pour « Quantum Secured Network ») est mis en œuvre. Il est composé d'une pluralité de nœuds et de liens. Chaque nœud est un nœud quantique et chaque lien est une liaison optique entre une paire de nœuds quantiques (plus précisément, entre une interface quantique de l'un des nœuds de la paire de nœuds quantiques et une interface quantique de l'autre nœud de la paire de nœuds quantiques). Deux nœuds quantiques reliés l'un à l'autre sont suffisamment proches pour que la liaison optique soit le support d'un canal quantique permettant la mise en œuvre du mécanisme de distribution de clés quantiques - QKD.

Sur le réseau QKD, les interfaces de deux nœuds quantiques reliés par un canal quantique se transmettent des photons qui, suite à une réconciliation, deviennent une série de bits aléatoires, qui forme par la suite une clé quantique.

Outre les nœuds quantiques, le réseau QKD (« QKDN ») comporte des entités centralisées, notamment un gestionnaire du réseau QKD (« QKDN manager») et un contrôleur du réseau QKD (« QKDN controller »), respectivement dénommés manageur QKDN et contrôleur QKDN dans ce qui suit.

Enfin, les différents nœuds quantiques sont connectés entre eux et aux entités centralisées par un réseau de communication classique, comme un réseau IP, par exemple public.

Pour acheminer une clé applicative $K_0$ (de chiffrement ou d'authentification par exemple) depuis un premier nœud quantique, ou nœud émetteur, dénommé Alice dans ce qui suit, vers un second nœud quantique, ou nœud destinataire, dénommé Mike dans ce qui suit, Alice demande au contrôleur QKDN de définir un chemin (ou route) à travers le réseau QKD reliant Alice à Mike.

Si Alice et Mike ne sont pas adjacents, ce chemin passe par un ou plusieurs nœuds quantiques intermédiaires, ou nœuds relais.

Deux nœuds relais successifs de ce chemin, reliés l'un à l'autre par un canal quantique, constitue un tronçon (ou saut) du chemin entre Alice et Mike sur le réseau QKD.

Un chemin est identifié par un identifiant de chemin.

Un chemin est une liste ordonnée des identifiants des interfaces des nœuds quantiques le long de ce chemin, à savoir les identifiants des deux interfaces du canal entre Alice et le premier nœud relais, les identifiants des deux interfaces du canal entre le premier nœud relais et le second nœud relais, ..., les identifiants des deux interfaces du canal entre le n-1$^{\text{ème}}$ nœud relais et Mike.

Dans cette liste, les interfaces du canal entre le nœud relais de rang i (i entier entre 1 et n) et le nœud relais de rang i-1 partagent une clé quantique $K_i$.

Une fois le chemin déterminé, le procédé de transfert de clé de l'état de la technique, tel que présenté dans la recommandation - ITU-T Y.3803 intitulée « Key management for quantum key distribution Networks » (« Gestion des clés pour les réseaux QKD »), de la commission d'études du secteur de la normalisation des télécommunications de l'Union Internationale des Télécommunications - UIT, consiste à réaliser un chiffrement / déchiffrement tronçon par tronçon :

Sur requête du contrôleur QKDN adressée au nœud relais i (requête indiquant l'identifiant du chemin entre Alice et Mike et les identifiants des interfaces des nœuds précédent i-1 et suivant i+1 sur ce chemin), le nœud i somme bit à bit la clé quantique $K_i$ (dénommée alors clé de transport puisqu'elle est utilisée pour le transport de la clé applicative) qu'il partage avec le nœud précédent i-1 avec la chaine qu'il reçoit du nœud précédent i-1 via le réseau IP, afin de retrouver la clé applicative $K_0$ à transférer. Le nœud relais i somme bit à bit la clé quantique $K_{i+1}$ (dénommée alors clé de transport puisqu'elle est utilisée pour le transport de la clé applicative) qu'il partage avec le nœud suivant i+1 et la clé applicative $K_0$ et transmet la chaine ainsi obtenue au nœud suivant i+1 via le réseau IP. Le nœud i informe le contrôleur QKDN qu'il a effectué l'opération requise. Le contrôleur QKDN peut alors émettre une requête vers le nœud suivant i+1. De proche en proche, la clé applicative $K_0$ est transmise de Alice à Mike sur le chemin déterminé par le contrôleur QKDN.

Cependant, dans ce procédé de transfert de clé, chaque nœud quantique sur le chemin entre Alice et Mike connait la clé applicative $K_0$ à transférer.

C'est la raison pour laquelle les nœuds quantiques du réseau QKD doivent être des nœuds de confiance (« trusted node »).

Cette contrainte forte est un frein à l'adoption des réseaux QKD en raison du coût élevé de développement des nœuds quantiques afin de respecter le niveau de sécurité imposé par la classification des clés échangées sur le réseau QKD et des vulnérabilités induites par la présence de nœuds intermédiaires, qu'il s'agisse d'un défaut de protection d'un nœud ou d'un nœud malicieux (par exemple, dans le cas de transit par des domaines du réseau QKD non maîtrisés).

L'ITU-T Y.3803 propose cependant un procédé alternatif de transfert de clé qui fait intervenir une entité spécifique, dénommée « nœud XOR » dans ce qui suit.

Le nœud XOR est adapté pour réaliser des opérations XOR. Une opération « XOR » (notée ⊕) est la sommation bit à bit de deux chaînes de même taille (opération OU exclusif). Le résultat d'un XOR est une chaine de même taille.

Le nœud XOR est un composant centralisé d'un système de gestion de clés - KMS (« Key Management System ») du réseau QKD. Le nœud XOR peut être indépendant des nœuds quantiques du réseau QKD ou constituer une fonctionnalité supplémentaire du nœud destinataire, Mike.

Le nœud XOR est accessible via le réseau IP par chacun des nœuds quantiques du réseau QKD.

Selon ce procédé alternatif, après avoir déterminé un chemin entre Alice et Mike, le contrôleur QKDN demande à Alice de calculer une première chaine élémentaire en sommant la clé applicative $K_0$ à transférer avec une clé de transport de son choix, qu'elle partage avec le nœud intermédiaire de rang 1 sur le chemin de Alice à Mike (la requête du contrôleur QKDN vers Alice indiquant l'identifiant du chemin et l'identifiant du nœud intermédiaire de rang 1).

D'une part, Alice répond au contrôleur QKDN en indiquant l'identifiant de la clé de transport utilisée, $K_1$, (ainsi que l'identifiant du chemin pour que le contrôleur QKDN puisse réconcilier les informations qu'il reçoit) et, d'autre part, Alice transmet la chaine élémentaire $K_0 \oplus K_1$ au nœud XOR (ainsi que l'identifiant du chemin pour que le nœud XOR puisse réconcilier les informations qu'il reçoit).

Puis, le contrôleur QKDN demande au nœud intermédiaire de rang 1 de sommer la première clé de transport $K_1$ choisie par Alice, avec une seconde clé de transport de son choix, qu'il partage avec le nœud intermédiaire de rang 2.

Le nœud intermédiaire de rang 1 répond au contrôleur QKDN en indiquant l'identifiant de la clé de transport $K_2$ choisie et d'autre part en transmettant la chaine élémentaire $K_1 \oplus K_2$ au nœud XOR.

De proche en proche, chacun des nœuds i (entre 0 et n-1) transmet au nœud XOR la chaine élémentaire $Ke_i = K_i \oplus K_{i+1}$.

Enfin, le contrôleur QKDN demande au nœud XOR de calculer une chaîne globale K en effectuant une opération XOR globale sur l'ensemble des chaînes élémentaires $Ke_i$ reçues des nœuds sur la route entre Alice et Mike.

Puisqu'effectuer deux opérations XOR avec une même clé revient à l'opération identité, la chaîne globale K est égale $K_0 \oplus K_n$, c'est-à-dire au résultat de l'opération XOR de la clé applicative qu'Alice souhaite transmettre à Mike et de la clé de transport $K_n$ que Mike partage avec le dernier nœud intermédiaire du chemin, i.e. le nœud de rang n-1.

Dans le cas où le nœud XOR est une fonctionnalité supplémentaire du nœud destinataire, Mike, ce dernier connaît la chaîne globale K.

Dans le cas où le nœud XOR est indépendant du nœud destinataire, la chaine globale K est transmise par le nœud XOR à Mike. Mike n'a plus qu'à effectuer l'opération XOR entre sa clé de transport $K_n$ et la chaine globale K pour extraire la clé applicative $K_0$.

Mike peut alors mémoriser la clé applicative $K_0$ dans une base de données pour la transmettre à une seconde application côté Mike, sur demande de cette seconde application, en tant par exemple que clé de chiffrement des échanges ultérieurs avec une première application côté Alice, première application à laquelle Alice a transmis la clé applicative $K_0$, en réponse à la demande de cette première application.

Il est à noter que le terme « clé à transférer » couvre le cas de la concaténation d'une suite de bits aléatoires (qui constitue une clé à proprement parler) avec des métadonnées associées à cette clé (telles qu'un identifiant, une date de création, etc.).

On fera référence dans la suite de ce document à des « clés », sans perdre de vue que cela recouvre divers cas possibles d'implémentation, notamment une clé comme « alea utile » ou une clé comme « alea utile augmenté de métadonnées ».

Selon ce procédé alternatif de transfert de clé, les nœuds intermédiaires du réseau QKD n'ont plus la capacité immédiate de connaître la clé applicative $K_0$ à acheminer. Seuls les nœuds d'accès au réseau QKD (le nœud de rang 1 pour Alice et le nœud de rang n-1 pour Mike) disposent d'éléments de connaissance importants : le nœud de rang 1 a la connaissance directe de la clé de transport $K_1$ et peut s'en servir pour retrouver la clé $K_0$ en interceptant le message transmis par Alice au nœud XOR contenant la somme $K_0 \oplus K_1$ ; de manière similaire, le nœud de rang n-1 a la connaissance directe de la clé de transport $K_n$ et peut s'en servir pour retrouver la clé $K_0$ s'il intercepte le message transmis à Mike par le nœud XOR et qui contient la clé globale $K_0 \oplus K_n$.

Le but de la présente invention est alors de proposer des améliorations au précédent procédé de transfert de clés fondé sur un réseau QKD, pour en améliorer la sécurité et augmenter la vitesse d'exécution.

Pour cela l'invention a pour objet un procédé d'échange d'une clé applicative dans une infrastructure de communication, l'infrastructure de communication comportant un réseau de communication « quantique » mettant en œuvre un mécanisme de distribution de clés quantiques, ou réseau QKD, le réseau QKD comportant une pluralité de nœud quantiques, deux nœuds quantiques en liaison sur le réseau quantique étant reliés par un canal quantique dont les deux interfaces, respectivement hébergées par chacun des deux nœuds quantiques, sont adaptées pour générer et partager au moins une clé quantique, ladite clé quantique étant sauvegardée dans une base de données locale de chacun desdits deux nœuds quantique, caractérisé en ce que, le réseau QKD comportant, en outre, un contrôleur adapté pour définir une route sur le réseau QKD, un gestionnaire de clés centralisé et une unité de calcul, ou « unité XOR », les différents composants du réseau QKD étant connectés à un réseau de communication « classique », le procédé comporte les étapes de :

- à chaque fois qu'une clé est modifiée dans la base de données locale d'un nœud quantique, transmission, par ledit nœud quantique, au gestionnaire de clés centralisé, d'un ensemble d'informations associées à la clé modifiée, l'ensemble d'informations comportant un identifiant de la clé modifiée et une taille de la clé odifiée, et, si la clé modifiée est une clé quantique, un identifiant de l'interface du nœud quantique qui est associée à la clé modifiée, et mémorisation, par le gestionnaire de clés centralisé, de l'ensemble d'informations dans une base de données centrale ;
- suite à la réception, par le contrôleur, d'une demande de route comportant une taille requise de clé applicative, un identifiant correspondant à un nœud quantique émetteur et un identifiant correspondant à un nœud quantique destinataire, détermination, par le contrôleur, d'une route sur le réseau QKD entre le nœud quantique émetteur et le nœud quantique destinataire, via une pluralité de nœuds quantiques relais, et transmission de la route déterminée au gestionnaire de clés centralisé, la route étant identifiée par un identifiant de route et correspondant à une liste ordonnée des interfaces des canaux quantiques entre les nœuds quantiques qui permettant de relier le nœud quantique émetteur et le nœud quantique destinataire, lesdites interfaces étant associées à des clés quantiques dont la taille est adaptée à la taille requise de clé applicative ;
- sélection de la clé applicative par le gestionnaire de clés centralisé dans la base de données centrale en fonction de la taille de clé applicative, parmi les clés associées au nœud quantique émetteur présentes dans la base de données centrale, et indication au nœud quantique émetteur de la clé applicative sélectionnée ;
- génération d'une commande, par le gestionnaire de clés centralisé, pour chacun des nœuds quantiques de la route, la commande pour le nœud quantique émetteur, respectivement le nœud quantique destinataire, donnant l'identifiant d'une clé quantique partagée avec un premier nœud quantique relais, respectivement un dernier nœud quantique relais, le long de la route, et la commande pour un ième nœud quantique relais donnant l'identifiant d'une clé quantique partagée avec le nœud quantique précédent et l'identifiant d'une clé quantique partagée avec le nœud quantique suivant, le long de la route, chaque commande intégrant en outre un identifiant de message correspondant à l'identifiant de route, les clés des commandes étant sélectionnées par le gestionnaire de clés centralisé dans la base de données centrale en tenant compte de la route déterminée par le contrôleur et de la taille de clé applicative ;
- envoi, en parallèle, à chacun des nœuds quantiques de la route, de la commande correspondante ;
- sommation, par le ième nœud quantique relais, des deux clés quantiques dont l'identifiant de clé figure dans la commande reçue, pour obtenir une chaine élémentaire, et pour le nœud quantique émetteur, de la clé quantique dont l'identifiant de clé figure dans la commande reçue et la clé applicative, et envoi d'une réponse à l'unité XOR contenant la chaine élémentaire résultat de la sommation et l'identifiant de message ;
- calcul, par l'unité XOR, d'une chaine globale en sommant les chaines élémentaires reçues de chacun des nœuds quantique relais et du nœud quantique émetteur qui sont associées à la route d'après l'identifiant de message ;
- transmission, par l'unité XOR, de la chaine globale au nœud quantique destinataire ;
- extraction, par le nœud quantique destinataire, de la clé applicative, en sommant la chaine globale et la clé quantique indiquée dans la commande reçue du gestionnaire de clés centralisé.

Suivant des modes particuliers de réalisation, le procédé comporte une ou plusieurs des caractéristiques suivantes, prises isolément ou suivant toutes les combinaisons techniquement possibles :

- le procédé comportant, en outre, pour initier l'échange d'une clé applicative : transmission, par une première application, vers le nœud quantique émetteur, d'une demande d'échange de clé applicative vers une seconde application, comportant un identifiant de la seconde application, et la taille de clé applicative ; transmission, par le nœud quantique émetteur, au gestionnaire de clés centralisé, d'une demande comportant un identifiant du nœud émetteur, un identifiant de la seconde application et la taille de clé applicative ; transmission, par le gestionnaire de clés centralisé, à un manageur du réseau QKD, d'une demande d'identification du nœud destinataire associé à la seconde application ; et, transmission, par le gestionnaire de clés centralisé, au contrôleur d'une demande de calcul d'une route contenant l'identifiant du nœud quantique émetteur, un identifiant du nœud quantique destinataire, et la taille de clé applicative ;

- le gestionnaire de clés centralisé : élabore une table de correspondance associant à l'identifiant de route, une pluralité d'identifiants de message ; transmet la table de correspondance à l'unité XOR ; et, génère une commande à destination d'un nœud quantique particulier de la route en incorporant un identifiant de message sélectionné parmi la pluralité d'identifiants de message, la réponse d'un nœud quantique particulier reprenant ledit identifiant de message, et l'unité XOR déterminant la route correspondant à la réponse reçue à partir de l'identifiant de message et de la table de correspondance, l'unité XOR sommant les clés élémentaires associées à un même identifiant de route ;
- le gestionnaire de clés centralisé effectue, en outre, des échanges fictifs avec des nœuds quantiques du réseau QKD, en émettant des commandes dont l'identifiant de message est fictif et n'est associé à aucun identifiant de route dans la table de correspondance ;
- un identifiant de message fictif est sélectionné de manière à être identifié en tant que tel par le nœud quantique recevant la commande, ledit nœud quantique générant alors deux aléas et transmettant la somme de ces deux aléas en tant que clé élémentaire dans la réponse envoyée à l'unité XOR ;
- le gestionnaire de clés centralisé génère des métadonnées au cours de l'échange de la clé applicative et partage lesdites métadonnées avec le nœud quantique émetteur et/ou le nœud quantique destinataire :

L'invention a également pour objet une infrastructure de communication adaptée pour la mise en œuvre du procédé précédent, comportant un réseau de communication « quantique » mettant en œuvre un mécanisme de distribution de clés quantiques, ou réseau QKD, le réseau QKD comportant une pluralité de nœuds quantiques, deux nœuds quantiques en liaison sur le réseau quantique étant reliés par un canal quantique dont les deux interfaces, respectivement hébergées par chacun des deux nœuds quantiques, sont adaptées pour générer et partager au moins une clé quantique, ladite clé quantique étant sauvegardée dans une base de données locale de chacun desdits deux nœuds, le réseau QKD comportant, en outre :

- un contrôleur du réseau QKDN, adapté pour calculer une route en fonction d'une taille de clé applicative, entre un nœud quantique émetteur et un nœud quantique destinataire ;;
- un gestionnaire de clés centralisé, en interface entre les nœuds quantiques et le contrôleur, tenant à jour une base de données centrale stockant un ensemble d'information pour chaque clé présente dans chaque base de données locale de chaque nœud quantique du réseau QKD, l'ensemble d'information comportant au moins un identifiant et une taille de la clé correspondante ; et,
- une unité de calcul ou unité XOR,

les différents composants de l'infrastructure de communication étant connectés via un réseau de communication « classique ».

L'invention a également pour objet un gestionnaire de clés centralisé adapté pour être intégré à l'infrastructure précédente.

De préférence, l'unité XOR est une fonctionnalité du gestionnaire de clés centralisé.

L'invention a également pour objet un produit programme d'ordinateur comportant des instructions qui, lorsqu'elles sont exécutées par un calculateur, permettent de mettre en œuvre les étapes du procédé précédent qui sont associées à un composant de l'infrastructure précédente.

L'invention apparaîtra plus clairement à la lecture de la description qui va suivre, donnée uniquement à titre d'exemple non limitatif, et faite en référence aux dessins dans lesquels :

- la figure 1 est une représentation sous forme de modules fonctionnels d'un mode de réalisation d'une infrastructure selon l'invention ;
- la figure 2 est une représentation sous forme de blocs d'un mode de réalisation d'un procédé de transfert de clé selon l'invention, ce procédé étant mis en œuvre par l'infrastructure de la figure 1.

Dans ce qui suit, lorsque l'on parle de la somme de deux chaines de bits, il s'agit d'effectuer la somme bit à bit de ces deux chaines, c'est-à-dire appliquer l'opérateur XOR (opération OU exclusif). Le résultat obtenu est une chaine de même longueur.

Une clé est une chaine particulière, dans la mesure où elle est destinée à être utilisée pour son caractère aléatoire et confidentiel (partagée uniquement avec les destinataires identifiés), notamment pour chiffrer une autre clé ou des données. En revanche, on utilise plus simplement le mot terme de « chaine » pour le cas d'une suite de bits destinée à porter de l'information (par exemple, une donnée chiffrée, un calcul « XOR », etc.).

## STRUCTURE

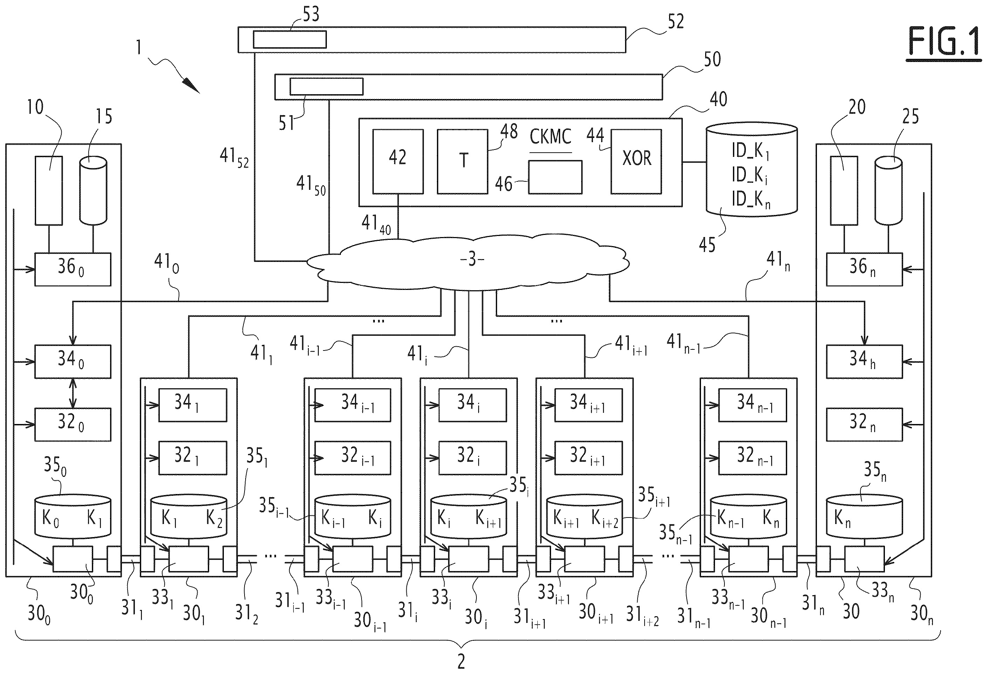

Un premier mode de réalisation de l'invention va être présenté en référence à la figure 1.

L'infrastructure de communication quantique - QCI (« quantum communication infrastructure ») 1 comporte un réseau quantique, ou réseau QKD 2, et un réseau de communication « classique » (par opposition à « quantique »), dénommé réseau IP dans ce qui suit. Il est référencé par le chiffre 3 sur la figure 1.

Le réseau IP 3 est par exemple un réseau étendu - WAN (« Wide Area Network »).

Pour augmenter la sécurité des communications sur le réseau IP 3, la liaison entre deux composants de l'infrastructure 1 est de préférence authentifiée selon les règles de l'art (par exemple par la mise en œuvre de techniques de signature post-quantiques ou hybrides). Cet aspect est hors du cadre de la présente invention.

Le réseau QKD 2 comporte : une pluralité de nœuds quantiques 30 ; un gestionnaire du réseau QKD, ou « manageur » QKDN (« QKDN manager ») 52 ; un contrôleur QKDN (« QKDN controller ») 50 ; et un gestionnaire de clés centralisé - CKMC (« Centralized Key Manager Controller ») 40.

Pour la mise en œuvre du procédé selon l'invention, un composant centralisé est prévu en interface entre les nœuds quantiques, d'une part, et le contrôleur 50 et le manageur 52, d'autre part. Ce composant centralisé fait partie du système de gestion de clés - KMS (« Key Management System ») du réseau QKD 2, comme les modules KM des nœuds quantiques. Ce composant centralisé est dénommé « gestionnaire de clés centralisé » - CKMC (« Centralized Key Management Controller »). Il porte la référence 40 sur la figure 1.

Le manageur QKDN 52 est connecté au réseau IP 3 par une liaison classique $41_{52}$.

Le contrôleur QKDN 50 est connecté au réseau IP 3 par une liaison classique $41_{50}$.

Le CKMC 40 est connecté au réseau IP 3 par une liaison classique $41_{40}$.

Le manageur QKDN 52 est mis à jour avec une cartographie initiale de la topologie du réseau QKD 2 à la mise en service du réseau.

Au cours de l'exploitation du réseau QKD 2, le manageur 52 reçoit des alarmes remontées par les modules KM des nœuds quantiques, via le CKMC 40. Ces alarmes, qui indiquent l'état courant de chaque nœud quantique du réseau, permettent une mise à jour dynamique de la cartographie initiale, afin d'obtenir une cartographie courante 53 de la topologie du réseau QKD 2 et ainsi pouvoir assurer des fonctions de supervision du réseau.

La cartographie liste notamment les nœuds quantiques, les identifiants des nœuds quantiques sur le réseau 3, les identifiants des interfaces de chaque canal connectant deux nœuds quantiques du réseau QKD 2, ainsi que les identifiants des applications associées à chaque nœud.

Sur demande du CKMC 40 (ladite demande comportant l'identifiant d'une application), le contrôleur 50 est adapté pour identifier le nœud du réseau 2 qui est associé à cette application.

Le contrôleur QKDN 50 est adapté pour télécharger régulièrement la cartographie courante auprès du manageur 52. En variante, le contrôleur QKDN 50 est adapté pour télécharger la cartographie initiale auprès du manageur 52, puis pour la mettre à jour de manière à obtenir la cartographie courante de la topologie du réseau QKD 2, à partir des alarmes, qui sont remontées par les nœuds quantiques, par exemple via le CKMC 40.

La communication entre le contrôleur 50 et le manageur 52 s'effectue par exemple via le réseau IP 3.

Le contrôleur 50 reçoit également des messages de service du CKMC 40 indiquant le « stock de bits » courant, c'est-à-dire le nombre et la taille des clés disponibles pour chaque interface de chaque nœud quantique du réseau QKD 2. La communication entre le contrôleur 50 et le QKDN 40 s'effectue via le réseau IP 3.

Ces informations (cartographie courante et stock de bits) permettent au contrôleur 50 de définir un plan d'adressage 51, sur la base duquel il peut ensuite calculer des routes optimales.

Sur demande du CKMC 40, ladite demande comportant l'identifiant de deux nœuds quantiques du réseau 2 (qui ne sont pas adjacents, i.e. en liaison directe par un canal quantique) et de la taille de la clé à transférer entre ces deux nœuds, le contrôleur QKDN 50 est adapté pour définir un chemin, ou route, sur le réseau QKD 2 entre ces deux nœuds quantiques, en tant que nœuds d'extrémité de cette route.

Le processus de détermination d'une route mis en œuvre par le contrôleur QKDN 50 est conforme à l'état de la technique.

Le contrôleur QKDN 50 est ainsi propre à déterminer une route sous la forme d'une liste L ordonnée des identifiants des interfaces quantiques constituant les extrémités de chaque saut entre nœuds quantiques le long de cette route. Une route est associée à un identifiant de route, ID_Route.

Le contrôleur QKDN 50 est propre à partager la route calculée avec le CKMC 40.

Sur la figure 1, seul les nœuds quantiques du chemin défini par le contrôleur QKDN 50 entre un nœud quantique émetteur $30_0$, dénommé Alice dans ce qui suit, et un nœud quantique destinataire $30_n$, dénommé Mike dans ce qui suit, ont été représentés.

Cette route passe par une succession de nœuds quantiques relais, qui sont indexés par l'entier i, entre 1 et n-1. Sur la figure 1, on a représenté le nœud d'accès côté émetteur, $30_1$, des nœuds intermédiaires, $30_{i-1}$, $30_i$, $30_{i+1}$, et le nœud d'accès côté destinataire, $30_{n-1}$, de la route depuis Alice vers Mike.

Le nœud quantique de rang 0 de cette route n'est autre que le nœud utilisateur émetteur, Alice, et le nœud quantique de rang n de cette route n'est autre que le nœud utilisateur destinataire, Mike.

Deux nœuds quantiques successifs de cette route sont reliés par un canal quantique, qui est établi, le long d'une liaison optique, entre deux interfaces quantiques appartenant respectivement à chacun de ces deux nœuds (à noter qu'un nœud quantique peut présenter plus de deux interfaces pour établir des canaux quantiques avec autant de nœuds quantiques voisins). Sur la figure 1, les canaux et les paires d'interfaces associées à chaque canal sont respectivement référencés $31_1$, $31_2$, $31_{i-1}$, $31_i$, $31_{i-1}$, $31_{i-2}$, $31_{n-1}$ et $31_n$.

Les interfaces quantiques d'un canal quantique permettent de générer et d'échanger régulièrement une ou plusieurs clés quantiques.

Chaque nœud quantique est muni d'un module de gestion de clés - KM. Il s'agit d'un regroupement logique d'un module LKMC $34_i$, d'un module relais de clé $32_i$, d'un KMA $33_i$ et d'un KSA $36_i$ (sur la figure 1, seuls les KSA, $36_0$ et $36_n$, des nœuds émetteur et destinataire sont représentés), ces différents modules étant en communication mutuelle via un bus de communication du nœud considéré.

Le KMA (« Key Management Agent » ou agent de gestion de clé) $33_i$ est un composant local du système de gestion de clés - KMS (« Key Management System ») du réseau QKD 2.

Le KMA $33_i$ du nœud $30_i$ est adapté pour gérer une base de données locale $35_i$ du nœud $30_i$. Cette base de donnée locale comporte chaque clé quantique générée et partagée par une interface quantique du nœud $30_i$.

La base de données locale $35_i$ mémorise ainsi les clés quantiques $K_i$ valides à l'instant courant sur chacun des canaux quantiques issus du nœud $30_i$ considéré. Dans cette base de données chaque clé $K_i$ est associée à un ensemble d'informations, notamment un identifiant de clé ID_$K_i$ et une taille de clé, L_$K_i$.

La figure 1 fait apparaître uniquement les clés quantiques utilisées lors d'un échange particulier de clés, ou clés de transport.

Ainsi Alice et le premier nœud relais $30_1$ partagent une clé de transport $K_1$ ; le premier nœud relais $30_1$ et le second nœud relais partagent une clé de transport $K_2$ ; le nœud précédent $30_{i-1}$ et le nœud courant $30_i$ partagent une clé de transport $K_i$ ; le nœud courant $30_i$ et le nœud suivant $30_{i+1}$ partagent une clé de transport $K_{i+1}$ ; et le nœud relais $30_{n-1}$ et Mike partagent une clé de transport $K_n$.

Un LKMC (« Local Key Manager Component » ou gestionnaire de clés local) $34_i$ assure les échanges, via le réseau IP 3 (auquel le LKMC est relié par une liaison classique $41_i$) avec les différentes composantes de l'infrastructure. Chaque LKMC (et par conséquent chaque nœud) est identifié par un identifiant sur le réseau IP 3. L'identifiant d'un nœud quantique peut être pris égal à l'identifiant de son module LKMC.

Le LKMC $34_i$ est adapté pour, sur information du KMA $33_i$ qu'une modification a été faite dans la base de données locale $35_i$, transmettre un message de mise à jour vers le CKMC 40. Un tel message comporte notamment les éléments d'informations associés à une clé nouvellement stockée dans la base locale $35_i$.

En particulier, le LKMC est adapté pour interpréter les commandes reçues du CKMC 40 et commander/interroger les autres modules fonctionnels du nœud qu'il équipe pour réaliser ces commandes : demander au KMA d'extraire de la base locale les deux clés dont les identifiants sont indiqués dans la commande reçue ; demander au module relais de clés de sommer lesdites deux clés ; et transmettre au module XOR du CKMC le résultat de cette sommation.

Le module relais de clés (« Key Relay ») $32_i$ est adapté pour effectuer, sur commande du LKMC, la somme bits à bits de deux clés stockées dans la base de données locale $35_i$ et extraites par le KMA $33_i$. Le résultat de cette opération est une chaîne élémentaire $Ke_i$. Le module $32_i$ est propre à adresser ce résultat au LKMC $34_i$.

Par exemple, le module $32_i$ du nœud relais $30_i$ est adapté pour calculer la chaine élémentaire $Ke_i$ résultat de la somme des clés quantiques $K_i$ et $K_{i+1}$ mémorisées par le nœud relais $30_i$ :

$$Ke_i = K_i \oplus K_{i+1}$$

Le nœud émetteur, Alice, comporte : un agent de gestion de clés - KMA $33_0$, une base de données locale $35_0$ de mémorisation de clés, un module de relais de clés $32_0$, un LKMC $34_0$, un agent de fourniture de clé - KSA (« Key Supplier Agent ») $36_0$ associé à un volume de mémorisation de clés applicatives 15, et une première application 10.

Une application est en fait colocalisée, connectée ou associée à un nœud. La première application 10 n'accède pas au volume de mémorisation de clés de chiffrement 15 associé au KSA $36_0$ directement, mais via le KSA $36_0$.

Il est à noter qu'une base de données locale $35_i$ mémorise des clés quantiques, mais peut, en outre, mémoriser des clés « non quantiques », au sens où elles sont générées différemment, par exemple par une application adaptée associée au nœud considéré et passant par le KMA $30_i$ du nœud considéré pour charger une clé et ses éléments d'information dans la base locale.

De manière similaire, le nœud récepteur, Mike, comporte : un KMA $33_n$ associé à une base de données locale $35_n$, un module de relais des clé $32_n$, un LKMC $34_n$, un KSA $36_n$ associé à un volume de mémorisation de clés applicatives 25, et une seconde application 20. La seconde application 20 n'accède pas au volume de mémorisation de clés applicatives 25 associé au KSA $36_n$ directement, mais via le KSA $36_n$.

Le gestionnaire de clés centralisé - CKMC 40 du réseau QKD 2 est connecté au réseau IP 3 par une liaison classique $41_{40}$. Pour cela, il comporte une interface de communication 42, adaptée pour communiquer via le réseau IP 3 avec les autres composants de l'infrastructure 1.

Le CKMC 40 est identifié par son adresse IP sur le réseau IP 3.

Dans le mode de réalisation préféré illustré sur les figures, le CKMC 40 intègre une unité XOR 44.

En particulier, l'unité XOR 44 traite les messages qui proviennent des nœuds $30_i$ et comportent des chaines élémentaires $Ke_i$.

L'unité XOR 44 est adaptée pour sommer les chaines élémentaires $Ke_i$ provenant des nœuds quantiques d'une même route, c'est-à-dire provenant de l'ensemble des nœuds quantiques le long de la route entre Alice et Mike. Le résultat de cette sommation est une chaine globale K.

Sachant que sommer deux fois la même clé revient à effectuer l'opération identité, la chaine globale K respecte donc la relation :

$$K = (K_0 \oplus K_1) \oplus (K_1 \oplus K_2) \oplus \ldots \oplus (K_{i-1} \oplus K_i) \oplus (K_i \oplus K_{i+1}) \oplus (K_{i-1} \oplus K_{i+2}) \oplus \ldots \oplus (K_{n-1} \oplus K_n)$$

L'unité XOR 44 est adaptée pour transmettre la chaine globale K au destinataire, Mike, via l'interface 42 et le réseau IP 3.

Le CKMC 40 comporte une base de données centrale 45 stockant les éléments d'information des clés disponibles dans la base de données locale $35_i$ de chacun des nœuds quantiques du réseau quantique 2.

La base de données centrale 45 du CKMC 40 comporte une entrée pour chaque clé $K_i$ valide. A cette entrée est associée un identifiant de clé $ID\_K_i$, la taille ce cette clé $K_i$, et, s'il s'agit d'une clé quantique, de l'identifiant de l'interface $31_i$ ayant participée à la génération de cette clé.

Pour tenir à jour le contenu de la base de données centrale 45, le CKMC 40 est adapté pour traiter des messages de mise à jour reçus des LKMC $34_i$ des nœuds quantiques déclarés dans la cartographie reçue du manageur.

Le CKMC 40 est adapté pour transmettre régulièrement le contenu de la base centrale au contrôleur 50, sous la forme d'un « stock de bits ». Ce dernier indique, pour chaque interface de chaque nœud quantique, le nombre de clés quantiques valides et la taille de chacune de ces clés quantiques.

Le CKMC 40 comporte de préférence une unité de correspondance 48 permettant de masquer l'identifiant d'une route aux nœuds quantiques, en utilisant une table T de correspondance. La table de correspondance associe à un identifiant de route $ID\_Route$, une pluralité d'identifiants de message de commande, $ID\_Message$.

Le CKMC 40 est propre à relayer vers le manageur QKDN 52 des messages de service (comme des alarmes) émis par les nœuds quantiques, notamment pour la mise à jour de la cartographie décrivant la topologie courante du réseau QKD.

## PROCEDE

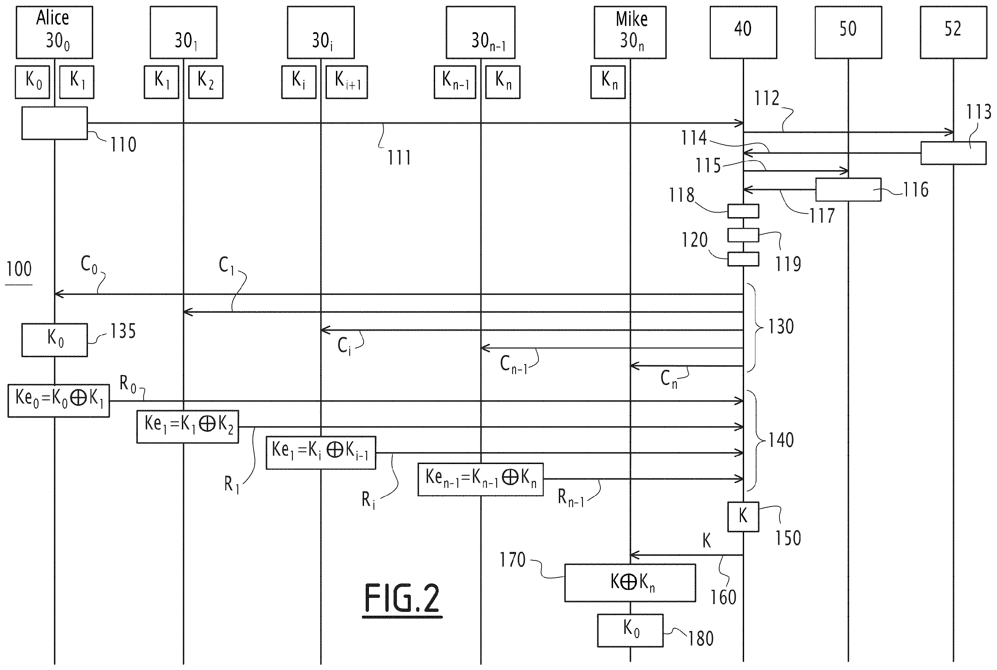

En se référant à la figure 2, un mode de réalisation du procédé d'échange de clés de chiffrement selon l'invention va être présenté.

Le procédé 100, mis en œuvre par l'infrastructure 1 de la figure 1, comporte les étapes successives suivantes.

La base de données locale $35_i$ d'un nœud quantique $30_i$ (i entre 1 et n) mémorise des clés quantiques, générées par l'une ou l'autre des interfaces du nœud quantique $30_i$, et, éventuellement, d'autre clés, générées par exemple par une application de génération aléatoire de clés, qui est associé au nœud quantique.

Dans la base de données locale $35_i$, une clé $K_i$ est associée à un ensemble d'informations. Celui-ci comporte au moins un identifiant de la clé $ID\_K_i$, ainsi qu'une taille de la clé. S'il s'agit d'une clé quantique, cet ensemble comporte également l'identifiant de l'interface pour laquelle cette clé quantique est valide. Cet ensemble comporte éventuellement des métadonnées associées à la clé $K_i$.

A chaque modification du contenu de la base de données locale $35_i$ (ajout d'une clé, suppression d'une clé, etc.), le KMA $30_i$ et le LKMC $34_i$ du nœud quantique $33_i$ génèrent un message de mise à jour vers le CKMC 40. Ce message de mise à jour comporte l'ensemble d'informations associée à la clé modifiée.

A partir des messages de mise à jour qu'il reçoit, le CKMC 40 tient à jour le contenu de la base de données centrale 45. Il mémorise notamment l'ensemble d'informations pour chaque clé présente dans une base de données locale du réseau quantique 2.

Par ailleurs, dès la mise en service du réseau 2, le manager QKDN 52 dispose d'une cartographie initiale de la topologie du réseau 2. La cartographie initiale peut être par exemple préparée par un opérateur du réseau et stockée dans la mémoire d'un calculateur constitutif du manageur QKDN 52.

Le manager QKDN 52 met à jour la cartographie de la topologie du réseau 2 au fur et à mesure des évolutions du réseau.

Pour cela, chaque nœud $30_i$ transmet régulièrement des alarmes vers le CKMC 40, qui les retransmet vers le manageur 52. Une alarme indique l'état courant des applications qui sont associées au nœud émetteur de l'alarme et/ou l'état courant de chacune des interfaces du nœud émetteur de l'alarme.

Le manager QKDN 52 fournit cette cartographie mise à jour du réseau en tant que cartographie courante 53.

La mise à jour de la cartographie courante 51 du contrôleur QKDN 50 est opérée via le manager QKDN 52.

Par ailleurs, le contrôleur QKDN 50 reçoit des messages de service du CKMC 40 indiquant le « stock de bits » courant, c'est-à-dire le nombre et la taille des clés disponibles pour chaque interface de chaque nœud quantique du réseau 2.

La cartographie courante et le stock de bits permettent au contrôleur 50 de définir un plan d'adressage 51.

La première application 10, connectée au nœud quantique Alice $30_0$, souhaite alors échanger avec la seconde application 20, connectée au nœud quantique Mike $30_n$.

Pour chiffrer ces échanges, on utilise une clé applicative partagée entre les première et seconde applications.

Pour partager une clé applicative entre la première et la seconde application, le procédé 100 est mis en œuvre.

Selon ce procédé, la première application 10 indique à Alice vouloir récupérer une clé applicative ayant une certaine taille $L_0$ pour le chiffrement ultérieur de ses échanges avec la seconde application 20.

Pour cela, dans une étape 110, la première application 10 adresse une requête au KSA $36_0$ d'Alice. Cette requête donne l'identifiant de la seconde application 20 et la taille $L_0$ de la clé applicative requise.

Dans l'étape 111, le KSA $36_0$ d'Alice émet une demande vers le CKMC 40 (via le LKMC $34_0$). Cette demande, qui comporte l'identifiant d'Alice, ID_A, reprend la taille $L_0$ de la clé applicative demandée et l'identifiant de la seconde application 20.

Dans l'étape 112, le CKMC 40 interroge le manageur 52 en indiquant l'identifiant des première et seconde applications, 10 et 20.

Dans l'étape 113, le manageur 52 vérifie si la première application 10 a l'autorisation d'effectuer un transfert de clé vers la seconde application.

Dans l'affirmative, le manageur 52 récupère, à partir de l'identifiant des première et seconde applications, 10 et 20, et de la cartographie courante 53 du réseau 2, l'identifiant du nœud quantique associé à la première application 10, en l'occurrence l'identifiant d'Alice et l'identifiant du nœud quantique associé à la seconde application 20, en l'occurrence l'identifiant de Mike et détermine si ces nœuds sont voisins sur le réseau 2 (connectés directement l'un à l'autre par un canal quantique).

Dans l'étape 114, le manageur 52 répond au CKMC 40 en donnant l'identifiant de Mike et s'il s'agit d'un nœud voisin d'Alice (étape 114), s'il s'agit de nœuds voisins, le procédé 100 passe à l'étape 118.

S'il ne s'agit pas de nœuds voisins, cela signifie que le transfert de la clé applicative va devoir s'appuyer sur des nœuds relais.

Dans ce cas, dans l'étape 115, le CKMC 40 envoie une demande de route au contrôleur QKDN 50.

Cette demande de route indique la taille $L_0$ de la clé applicative à transférer et l'identifiant de la première application et l'identifiant de la seconde application.

En variante, la demande de route ne donne pas les identifiants des première et seconde applications, mais les identifiants des nœuds Alice et Mike, ce qui permet de cacher les identifiants des applications au contrôleur 50 et ainsi assurer un meilleur niveau de sécurité.

Dans l'étape 116, le contrôleur 50 détermine une route sur le réseau QKD entre Alice et Mike. Pour cela il tient compte de la cartographie courante 51 du réseau QKD 2.

Pour élaborer la route, le contrôleur 50 tient en particulier compte de la taille de clé applicative à échanger. En effet, pour les opérations de sommation bits à bits, il faut utiliser des clés quantiques de même taille que la clé applicative $K_0$. Il faut donc choisir des nœuds dont les interfaces partagent des clés quantiques adaptées en taille.

Cette route prend la forme d'une liste. Il s'agit d'une liste ordonnée des identifiants des interfaces $31_i$ des nœuds quantiques $30_i$ depuis Alice (i=0) jusqu'à Mike (i=n).

A cette liste est associée à un identifiant de route, ID_Route.

Dans l'étape 117, le contrôleur 50 renvoie la route qu'il a élaborée vers le CKMC 40.

Dans l'étape 118, le CKMC 40 sélectionne, dans la base de données centrale 45, une clé de taille $L_0$ parmi les clés disponibles dans la base de données locale $35_0$ d'Alice en tant que clé applicative $K_0$. Lorsque la route comporte plusieurs tronçons, il peut s'agir d'une clé quantique ou d'une clé non quantique. Lorsque la route comporte un unique tronçon, il s'agit d'une clé quantique partagée entre Alice et Mike.

Dans l'étape 119, lorsque la route comporte plusieurs tronçons, pour chaque tronçon de la route ID_Route, le CKMC 40 sélectionne, dans la base de données centrale 45, une clé quantique partagée entre les deux interfaces des nœuds quantiques d'extrémité du tronçon considéré et présentant la taille $L_0$ requise. Par exemple, le CKMC sélectionne la clé $K_i$ partagée entre les interfaces $31_i$ des nœuds $30_{i-1}$ et $30_i$.

Dans l'étape 120, le CKMC 40 élabore une commande $C_i$ à destination de chacun des nœuds $30_i$ identifiés le long de la route ID_Route, pour i entre 0 et n.

La commande $C_i$ (i entre 1 et n-1) à destination du nœud $30_i$ indique l'identifiant de la route, ID_Route, l'identifiant ID_$K_i$ de la clé $K_i$ précédemment sélectionnée et l'identifiant de l'interface avec le nœud précédent $30_{i-1}$ de la route, ainsi que l'identifiant ID_$K_{i+1}$ de la clé $K_{i+1}$ précédemment sélectionnée et l'identifiant de l'interface avec le nœud suivant $30_{i+1}$ de la route.

La commande $C_0$ à destination du nœud $30_0$ indique l'identifiant de la route, ID_Route, et l'identifiant ID_$K_1$ de la clé $K_1$ partagée avec le nœud suivant $30_1$ et l'identifiant de la clé de transport $K_0$ précédemment sélectionnée à l'étape 118.

La commande $C_n$ à destination du nœud $30_n$ indique l'identifiant de la route, ID_Route, et l'identifiant ID_$K_n$ de la clé $K_n$ partagée avec le nœud précédent $30_{n-1}$. La structure de cette commande permet d'indiquer à Mike quelle clé sera à utiliser dans l'étape 170. Le nœud $30_n$ ne répond pas à une telle commande.

Lorsque la route comporte un unique tronçon, i.e. Alice et Mike étant voisins, le CKMC 40 élabore une commande similaire pour Alice et Mike, avec l'identifiant de la clé de transport $K_0$ sélectionnée à l'étape 118.

Avantageusement, dans une commande, le gestionnaire de clés centralisé 40 remplace l'identifiant de la route ID_Route par un identifiant de message ID_Message, ceci afin de masquer l'identifiant de la route au nœud quantique $30_i$ destinataire de la commande $C_i$.

Dans ce cas, le CKMC 40 choisit un identifiant de message différent pour chaque commande parmi les différentes commandes adressées au nœuds de la route. L'unicité d'un identifiant de message permet de décorréler les commandes envoyées aux nœuds quantiques d'une même route et ainsi d'augmenter la protection en cas d'interception des commandes ou des réponses à ces commandes. En effet, grâce à l'unicité des identifiants de message, en cas d'interception d'une commande ou de sa réponse, l'attaquant ne pourra pas retrouver à quelle route et donc à quel transfert de clé de transport ce message contribue.

Pour cela, le CKMC 40 construit une table de correspondance T entre l'identifiant de la route et les identifiants de message effectivement utilisés dans la préparation des commandes $C_i$.

Le CKMC 40 partage la table de correspondance T à l'unité XOR 44.

Dans l'étape 130, les commandes $C_i$ sont envoyées en parallèle par le CKMC 40 aux LKMC $34_i$ des différents nœuds quantiques $30_i$.

La parallélisation de l'envoi des commandes par le gestionnaire de clés centralisé 40 aux différents nœuds quantique le long de la route entre Alice et Mike permet de gagner du temps dans l'exécution du transfert de la clé de transport $K_0$ entre Alice et Mike, comparé à l'état de la technique, qui réalise ce même transfert en mettant en œuvre un envoi séquentiel des instructions de sommation de paires de clés aux différents nœuds quantiques situés le long de la route entre Alice et Mike.

Cela permet également de réduire la probabilité que la clé quantique sélectionnée pour un tronçon de la route entre Alice et Mike soit en fait périmée au moment où on demande aux nœuds quantiques de ce tronçon d'utiliser cette clé.

La parallélisation permet également de réduire la probabilité qu'un nœud quantique le long de la route entre Alice et Mike, ou plutôt l'interface de ce nœud, tombe en panne après la sélection de la route à suivre, mais avant que l'on ait demandé à ce nœud d'utiliser cette clé, puisqu'au moment de la sélection de la route tous les nœuds de la route sont opérationnels.

Dans le cas d'une route à un unique tronçon, Alice et Mike interprètent la commande reçue (une commande intégrant par exemple un champ binaire prenant la valeur unitaire lorsque le route est à un tronçon et la valeur nulle lorsque la route est à plusieurs tronçons) comme suffisante pour déplacer la clé $K_0$ indiquée dans la commande, de la base de données locale vers la base de donnée de données de chiffrement, respectivement du côté d'Alice et du côté de Mike.

Dans le cas d'une route à plusieurs tronçons, dans l'étape 135, la commande $C_o$ est d'abord interprétée comme indicative de la clé applicative $K_0$ sélectionnée par le CKMC 40 et à utiliser par la première application 10 pour ses échanges avec la seconde application 20. Dans l'étape 135, le KMA $36_0$ d'Alice mémorise la clé applicative $K_0$ dans le volume de mémorisation de clés 15.

Toujours pour le cas d'une route à plusieurs tronçons, dans une étape 140, au niveau de chaque nœud quantique de la route, la commande $C_i$ est interprétée par le LKMC $34_i$ destinataire comme une demande de calcul de la somme des clés précédente $K_i$ et suivante $K_{i+1}$ dans une chaine élémentaire $Ke_i$.

Ainsi, dans l'étape 140, le LKMC $34_i$ demande au KMA $33_i$ d'extraire de la base de données locale $35_i$ les deux clés qui correspondent aux identifiants indiqués dans la commande $C_i$. Puis, le module relayeur de clé $32_i$ effectue la somme de ces deux clés quantiques sur demande du LKMC $34_i$ :

$$Ke_i = K_i \oplus K_{i+1}$$

Il est à noter que la base de données locale d'un nœud mémorise de nombreuses clés quantiques, mais le choix des deux clés à sommer parmi l'ensemble des clés disponibles est réalisé par le CKMC 40.

Le LKMC $34_i$ transmet ensuite la chaine élémentaire $Ke_i$ obtenue, dans un message de réponse $R_i$, vers le module XOR 44 du CKMC 40.

La réponse $R_i$ comporte l'identifiant de la route (ou du message lorsque cette variante est mise en œuvre), information qui est reprise de la commande $C_i$ incidente, ainsi que la chaine élémentaire $Ke_i$.

Dans l'étape 150, l'unité XOR 44 du CKMC 40 traite les réponses reçues.

Si la réponse comporte un identifiant de message, l'unité XOR 44 utilise la table de correspondance T pour retrouver l'identifiant de la route associée.

L'unité XOR 44 calcule ensuite une chaine globale K à partir des chaines élémentaires $Ke_i$ des réponses $R_i$ (i entre 0 et n-1) attachées à une même route ID_Route.

Le résultat de cette opération est la chaine globale K :

$$K = (K_0 \oplus K_1) \oplus (K_1 \oplus K_2) \oplus \ldots \oplus (K_{i-1} \oplus K_i) \oplus (K_i \oplus K_{i+1}) \oplus (K_{i+1} \oplus K_{i+2}) \oplus \ldots \oplus (K_{n-1} \oplus K_n)$$

Soit :

$$K = K_0 \oplus K_n$$

Dans l'étape 160, l'unité XOR 44 transmet la chaine globale K au KMA 36n de Mike le long de la liaison 41n.

À l'étape 170, le KMA $36_n$ de Mike somme la chaine globale K avec la clé quantique $K_n$ de Mike, l'identifiant de la clé $K_n$ ayant été fourni dans la commande $C_n$.

Cela permet à Mike d'extraire la clé applicative $K_0$.

Dans l'étape 180, le KMA $36_n$ de Mike mémorise la clé applicative $K_0$ dans le volume de mémorisation de clés 25.

Cette clé applicative peut alors être utilisée pour des échanges chiffrés entre les première et seconde applications 10 et 20, par exemple directement via le réseau IP 3.

## Variantes

Dans une première variante de réalisation, des métadonnées sont associées à la clé globale K, qui est transmise à Mike par le gestionnaire de clés centralisé CKMC 40.

Ces métadonnées, comme la date de fin de vie, le paramètre de sécurité Epsilon, etc., sont élaborées par le gestionnaire de clés centralisé 40, par exemple après que l'unité XOR 44 a déterminé la valeur de la clé globale K.

Ces métadonnées dépendent avantageusement des métadonnées associées aux clés quantiques utilisées pour le transfert. Les métadonnées associées à une clé quantique peuvent être définies par le KMA 33i du nœud quantique au moment de sa génération et de sa mémorisation dans la base de données locale $35_i$. Les métadonnées sont transmises au CKMC 40 dans les messages de mise à jour en tant que données de l'ensemble d'informations associé à une clé.

Puis les métadonnées de la clé globale K sont transmises dans un message dédié d'une part à Mike et d'autre part à Alice.

Ces métadonnées peuvent être associées, par chacun des utilisateurs Alice et Mike, à la clé applicative $K_0$ échangée.

Avec ce mécanisme, des métadonnées relatives à la clé applicative $K_0$ sont partagées entre Alice et Mike sans avoir besoin d'utiliser une ou plusieurs autres clés de transport pour chiffrer la communication de ces métadonnées directement entre Alice et Mike via le réseau IP.

Dans une seconde variante de réalisation, lors d'un transfert de clé, des échanges factices sont avantageusement effectués entre le gestionnaire de clés centralisé 40 et les nœuds quantiques $30_i$ du réseau quantique.

Dans un premier exemple, un message de commande avec un identifiant de message ne correspondant à aucune route peut être envoyé par le CKMC à un nœud quantique du réseau. Le nœud quantique cible effectue la tâche calculatoire demandée et émet un message de réponse vers l'unité XOR 44. Après avoir acquitté ce message comme tout autre message de réponse, l'unité XOR 44 ignore le message de réponse élaboré par le nœud quantique cible puisque l'identifiant de message de la réponse n'est rattaché à aucune route dans la table de correspondance T.

Dans un second exemple, un fichier de configuration du CKMC 40 contient une liste de valeurs interdites. Le CKMC 40 envoie au nœud quantique une commande dont l'identifiant de message, qui ne correspond à aucune route, est un multiple de l'une des valeurs interdites. Le nœud quantique a ses propres valeurs interdites qui sont spécifiées dans un fichier de configuration. Ainsi, en cas de compromission de ce nœud, les valeurs interdites des autres nœuds ne sont pas dévoilées. Le nœud vérifie alors si l'identifiant de message contenu dans la commande reçue est un multiple de l'une de ses valeurs interdites. Dans l'affirmative, le nœud calcule une chaine élémentaire en sommant deux aléas générés logiciellement et non pas à partir de deux de ses clés quantiques. Le nœud transfère le résultat à l'unité XOR 44 dans un message de réponse. Après l'avoir acquitté comme tout autre message de réponse, l'unité XOR 44 ignore ce message de réponse puisque son identifiant n'est rattaché à aucune route.

Bien que le premier exemple dispose d'un meilleur niveau de sécurité, le second exemple évite de gaspiller des clés quantiques.

En cas d'interception d'un tel échange factice, l'attaquant n'a aucune certitude sur la pertinence du contenu du message intercepté.

Des échanges factices peuvent également être effectuées entre le CKMC 40 et des nœuds inactifs du réseau. Un tel « bourrage » permet de masquer à un potentiel attaquant les habitudes d'utilisation du réseau quantique, comme par exemple le transfert de clé de transport aux mêmes heures de la journée entre deux utilisateurs.

Dans une troisième variante, les communications entre le gestionnaire de clés centralisé 40 et les nœuds utilisateurs que sont Alice et Mike sont avantageusement chiffrées, puisque des informations sensibles sont échangées comme la demande de route, la clé de transport à échanger, la clé globale, d'éventuelles métadonnées, etc. Le gestionnaire de clés centralisé 40 partage donc avec Alice une première clé de sécurité et avec Mike une seconde clé de sécurité. Le partage des clés de sécurité entre ces composants de l'infrastructure s'effectue conformément à l'état de la technique.

Dans une quatrième variante, d'autres architectures sont envisageables. Par exemple, l'unité XOR est indépendante du gestionnaire de clés centralisé 40. Il peut alors s'agir d'une fonctionnalité supplémentaire d'un nœud quantique ou une unité indépendante. Par exemple encore, l'unité XOR peut être colocalisée avec le nœud Mike.

Le mode de réalisation présenté en détail ci-dessus propose une certaine répartition des tâches entre le manageur 52 et le contrôleur 50, mais d'autres répartitions sont envisageables. Notamment, la mise à jour de la cartographie peut être faite par le manageur et/ou le contrôleur 50 et/ou le CKMC 40. Les alertes provenant des nœuds sont alors acheminées aux composants qui en ont besoin.

## Avantages

Le module de gestion de clés centralisé constitue une implémentation particulière conforme au standard, notamment la recommandation ITU-T Y.3803, en particulier dans sa version approuvée le 29 novembre 2023.

Le module de gestion de clés centralisé permet l'optimisation du transfert des clés de transport sur un réseau quantique en effectuant en parallèle l'interrogation des nœuds quantiques de la route choisie pour le calcul de la chaine globale.

En effet, la séquentialisation des commandes selon l'état de la technique conduit à un transfert de clé de transport lent, qui augmente le risque de reroutage à cause d'une panne affectant les composants d'un tronçon de la route initialement sélectionnée, ou le risque de collision entre des transferts de clés de transport empruntant le même chemin, puisque la séquentialisation ne permet pas de traiter plusieurs demandes simultanément.

Au contraire, avec la présente invention plusieurs demandes de transfert de clé de transport peuvent être prises en compte simultanément.

De plus, le module de gestion de clés centralisé, en interface entre les nœuds quantiques et le contrôleur du réseau quantique, permet d'accroitre la robustesse ainsi que la confidentialité des échanges.

En effet, selon l'état de la technique, le nœud XOR est dans l'impossibilité de vérifier l'authenticité et/ou l'intégrité des éléments de calcul qui lui sont transmis par les différents nœuds quantiques. Dans ces conditions, une analyse des flux permet de connaître le chemin parcouru par la clé de transport à partager. Avec l'invention, l'unité XOR du module de gestion de clés centralisé est adapté pour vérifier les éléments de calcul reçus des nœuds quantiques, en utilisant l'identifiant de route, ou l'identifiant de message.

La gestion centralisée des métadonnées permet d'économiser l'usage de clés de transport, qui sinon seraient nécessaires pour chiffrer ces métadonnées.

## Revendications

1. Procédé (100) d'échange d'une clé applicative ($K_0$) dans une infrastructure de communication (1), l'infrastructure de communication comportant un réseau de communication « quantique » mettant en œuvre un mécanisme de distribution de clés quantiques, ou réseau QKD (2), le réseau QKD (2) comportant une pluralité de nœud quantiques ($30_i$), deux nœuds quantiques en liaison sur le réseau quantique étant reliés par un canal quantique dont les deux interfaces, respectivement hébergées par chacun des deux nœuds quantiques, sont adaptées pour générer et partager au moins une clé quantique, ladite clé quantique étant sauvegardée dans une base de données locale de chacun desdits deux nœuds quantique, **caractérisé en ce que**, le réseau QKD (2) comportant, en outre, un contrôleur (50) adapté pour définir une route sur le réseau QKD (2), un gestionnaire de clés centralisé (40) et une unité de calcul, ou « unité XOR » (44), les différents composants du réseau QKD étant connectés à un réseau de communication « classique » (3), le procédé comporte les étapes de :

   - à chaque fois qu'une clé est modifiée dans la base de données locale d'un nœud quantique, transmission, par ledit nœud quantique, au gestionnaire de clés centralisé (40), d'un ensemble d'informations associées à la clé modifiée, l'ensemble d'informations comportant un identifiant de la clé modifiée et une taille de la clé modifiée, et, si la clé modifiée est une clé quantique, un identifiant de l'interface du nœud quantique qui est associée à la clé modifiée, et mémorisation, par le gestionnaire de clés centralisé (40), de l'ensemble d'informations dans une base de données centrale (45) ;

- suite à la réception, par le contrôleur (50), d'une demande de route comportant une taille requise de clé applicative, un identifiant correspondant à un nœud quantique émetteur $(30_0)$ et un identifiant correspondant à un nœud quantique destinataire $(30_n)$, détermination (116), par le contrôleur (50), d'une route sur le réseau QKD entre le nœud quantique émetteur $(30_0)$ et le nœud quantique destinataire $(30_n)$, via une pluralité de nœuds quantiques relais $(30_1$ à $30_{n-1})$, et transmission de la route déterminée au gestionnaire de clés centralisé (40), la route étant identifiée par un identifiant de route et correspondant à une liste ordonnée des interfaces des canaux quantiques entre les nœuds quantiques qui permettant de relier le nœud quantique émetteur $(30_0)$ et le nœud quantique destinataire $(30_n)$, lesdites interfaces étant associées à des clés quantiques dont la taille est adaptée à la taille requise de clé applicative ;

- sélection de la clé applicative par le gestionnaire de clés centralisé (40) dans la base de données centrale en fonction de la taille de clé applicative, parmi les clés associées au nœud quantique émetteur présentes dans la base de données centrale, et indication au nœud quantique émetteur de la clé applicative $(K_0)$ sélectionnée ;

- génération d'une commande $(C_i)$, par le gestionnaire de clés centralisé (40), pour chacun des nœuds quantiques de la route, la commande pour le nœud quantique émetteur, respectivement le nœud quantique destinataire, donnant l'identifiant d'une clé quantique partagée avec un premier nœud quantique relais, respectivement un dernier nœud quantique relais, le long de la route, et la commande pour un $i^{ème}$ nœud quantique relais donnant l'identifiant d'une clé quantique partagée avec le nœud quantique précédent et l'identifiant d'une clé quantique partagée avec le nœud quantique suivant, le long de la route, chaque commande intégrant en outre un identifiant de message correspondant à l'identifiant de route, les clés des commandes étant sélectionnées par le gestionnaire de clés centralisé (40) dans la base de données centrale (45) en tenant compte de la route déterminée par le contrôleur (50) et de la taille de clé applicative ;

- envoi (130), en parallèle, à chacun des nœuds quantiques de la route, de la commande correspondante ;

- sommation (140), par le $i^{ème}$ nœud quantique relais, des deux clés quantiques dont l'identifiant de clé figure dans la commande reçue, pour obtenir une chaine élémentaire, et pour le nœud quantique émetteur, de la clé quantique dont l'identifiant de clé figure dans la commande reçue et la clé applicative, et envoi d'une réponse à l'unité XOR (44) contenant la chaine élémentaire résultat de la sommation et l'identifiant de message ;

- calcul (150), par l'unité XOR (44), d'une chaine globale (K) en sommant les chaines élémentaires reçues de chacun des nœuds quantique relais $(30_i)$ et du nœud quantique émetteur $(30_0)$ qui sont associées à la route d'après l'identifiant de message ;

- transmission (160), par l'unité XOR (44), de la chaine globale (K) au nœud quantique destinataire $(30_n)$ ;

- extraction (170), par le nœud quantique destinataire $(30_n)$, de la clé applicative $(K_0)$, en sommant la chaine globale (K) et la clé quantique $(K_n)$ indiquée dans la commande reçue du gestionnaire de clés centralisé.

2. Procédé selon la revendication 1, comportant, en outre, pour initier l'échange d'une clé applicative $(K_0)$ :

- transmission, par une première application, vers le nœud quantique émetteur $(30_0)$, d'une demande d'échange de clé applicative vers une seconde application, comportant un identifiant de la seconde application, et la taille de clé applicative ;

- transmission, par le nœud quantique émetteur $(30_0)$, au gestionnaire de clés centralisé (40), d'une demande comportant un identifiant du nœud émetteur, un identifiant de la seconde application et la taille de clé applicative ;

- transmission, par le gestionnaire de clés centralisé (40), à un manageur (52) du réseau QKD (2), d'une demande d'identification du nœud destinataire associé à la seconde application ; et,

- transmission, par le gestionnaire de clés centralisé (40), au contrôleur (50) d'une demande de calcul d'une route contenant l'identifiant du nœud quantique émetteur, un identifiant du nœud quantique destinataire, et la taille de clé applicative.

3. Procédé selon l'une quelconque des revendications 1 à 2, dans lequel, le gestionnaire de clés centralisé (40) :

- élabore une table de correspondance associant à l'identifiant de route, une pluralité d'identifiants de message ;

- transmet la table de correspondance à l'unité XOR (44) ; et,

- génère une commande à destination d'un nœud quantique particulier de la route en incorporant un identifiant de message sélectionné parmi la pluralité d'identifiants de message, la réponse d'un nœud quantique particulier reprenant ledit identifiant de message, et l'unité XOR (44) déterminant la route correspondant à la réponse reçue à partir de l'identifiant de message et de la table de correspondance, l'unité XOR (44) sommant les clés élémentaires associées à un même identifiant de route.

4. Procédé selon la revendication 3, dans lequel le gestionnaire de clés centralisé (40) effectue, en outre, des échanges fictifs avec des nœuds quantiques du réseau QKD (2), en émettant des commandes dont l'identifiant de message est fictif et n'est associé à aucun identifiant de route dans la table de correspondance.

5. Procédé selon la revendication 4, dans lequel un identifiant de message fictif est sélectionné de manière à être identifié en tant que tel par le nœud quantique recevant la commande, ledit nœud quantique générant alors deux aléas et transmettant la somme de ces deux aléas en tant que clé élémentaire dans la réponse envoyée à l'unité XOR (44).

6. Procédé selon l'une quelconque des revendications 1 à 5, dans lequel le gestionnaire de clés centralisé (40) génère des métadonnées au cours de l'échange de la clé applicative ($K_0$) et partage lesdites métadonnées avec le nœud quantique émetteur et/ou le nœud quantique destinataire.

7. Infrastructure de communication (1) adaptée pour la mise en œuvre d'un procédé d'échange d'une clé applicative selon l'une quelconque des revendications 1 à 6, comportant un réseau de communication « quantique » mettant en œuvre un mécanisme de distribution de clés quantiques, ou réseau QKD (2), le réseau QKD (2) comportant une pluralité de nœuds quantiques ($30_i$), deux nœuds quantiques en liaison sur le réseau quantique étant reliés par un canal quantique dont les deux interfaces, respectivement hébergées par chacun des deux nœuds quantiques, sont adaptées pour générer et partager au moins une clé quantique, ladite clé quantique étant sauvegardée dans une base de données locale de chacun desdits deux nœuds, le réseau QKD (2) comportant, en outre :

   - un contrôleur (50) du réseau QKDN (2), adapté pour calculer une route en fonction d'une taille de clé applicative, entre un nœud quantique émetteur ($30_0$) et un nœud quantique destinataire ($30_n$) ;
   - un gestionnaire de clés centralisé (40), en interface entre les nœuds quantiques et le contrôleur (50), tenant à jour une base de données centrale (45) stockant un ensemble d'information pour chaque clé présente dans chaque base de données locale de chaque nœud quantique du réseau QKD (2), l'ensemble d'information comportant au moins un identifiant et une taille de la clé correspondante ; et,
   - une unité de calcul ou unité XOR (44),

   les différents composants de l'infrastructure de communication étant connectés via un réseau de communication « classique » (3).

8. Gestionnaire de clés centralisé (40) adapté pour être intégré à une infrastructure de communication selon la revendication 7.

9. Gestionnaire de clés centralisé (40) selon la revendication 8, dans lequel l'unité XOR (40) est une fonctionnalité du gestionnaire de clés centralisé (40).

10. Produit programme d'ordinateur comportant des instructions qui, lorsqu'elles sont exécutées par un calculateur, permettent de mettre en œuvre les étapes, associées à un composant de l'infrastructure de la revendication 7, d'un procédé conforme à l'une quelconque des revendications 1 à 6.

FIG.1

FIG.2

EP 4 749 990 A1

**RAPPORT DE RECHERCHE EUROPEENNE**

Europäisches Patentamt
European Patent Office
Office européen des brevets

Numéro de la demande

EP 25 21 7552

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | NAOMI R SOLOMONS ET AL: "Scalable authentication and optimal flooding in a quantum network", ARXIV.ORG, CORNELL UNIVERSITY LIBRARY, 201 OLIN LIBRARY CORNELL UNIVERSITY ITHACA, NY 14853, 28 janvier 2021 (2021-01-28), XP081870331, * abrégé * * Chapitre I. "Introduction" * * Chapitre III. "Secure inaugural authentication transfer protocol" * * Chapitre IV. "Optimal key rates using key flooding with trusted nodes" * * Chapitre V. "Practical applications of SIAT and key flooding" * * figures 4,11 * ----- | 1-10 | INV. H04L9/08 |
| A | CN 114 362 938 A (GUANGDONG GUANGTENG QUANTUM TECH LIMITED COMPANY) 15 avril 2022 (2022-04-15) * abrégé * * "Summary of the invention" * * "Detailed ways" * ----- | 1-10 | |
| A | US 2016/248581 A1 (FU YINGFANG [CN] ET AL) 25 août 2016 (2016-08-25) * abrégé * * alinéas [0005] - [0015] * * alinéas [0036] - [0044] * ----- | 1-10 | |
| A | US 2010/299526 A1 (WISEMAN SIMON ROBERT [GB] ET AL) 25 novembre 2010 (2010-11-25) * abrégé * * alinéas [0005] - [0047] * ----- | 1-10 | |

**DOMAINES TECHNIQUES RECHERCHES (IPC)**

H04L

Le présent rapport a été établi pour toutes les revendications

| Lieu de la recherche | Date d'achèvement de la recherche | Examinateur |
|---|---|---|
| Munich | 7 janvier 2026 | Di Felice, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

........................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 25 21 7552

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

07-01-2026

| Document brevet cité au rapport de recherche | Date de publication | Membre(s) de la famille de brevet(s) | | Date de publication |
|---|---|---|---|---|
| CN 114362938 A | 15-04-2022 | CN | 114362938 A | 15-04-2022 |
| | | CN | 218336048 U | 17-01-2023 |
| US 2016248581 A1 | 25-08-2016 | CN | 105827397 A | 03-08-2016 |
| | | EP | 3243295 A1 | 15-11-2017 |
| | | JP | 6783772 B2 | 11-11-2020 |
| | | JP | 2018502514 A | 25-01-2018 |
| | | KR | 20170115055 A | 16-10-2017 |
| | | TW | 201633742 A | 16-09-2016 |
| | | US | 2016248581 A1 | 25-08-2016 |
| | | WO | 2016112086 A1 | 14-07-2016 |
| US 2010299526 A1 | 25-11-2010 | EP | 2248318 A2 | 10-11-2010 |
| | | JP | 5492095 B2 | 14-05-2014 |
| | | JP | 2011510581 A | 31-03-2011 |
| | | US | 2010299526 A1 | 25-11-2010 |
| | | WO | 2009093034 A2 | 30-07-2009 |

EPO FORM P0460

Pour tout renseignement concernant cette annexe : voir Journal Officiel de l'Office européen des brevets, No.12/82